# FASCICULE DE BREVET EUROPEEN

(11) **EP 1 278 645 B1**
(45) Date de publication et mention de la délivrance du brevet: **30.07.2008**
(21) Numéro de dépôt: 01931785.8
(22) Date de dépôt: 03.05.2001
(51) Int. Cl.: B42D 15/00

(54) **MOYEN DE SECURISATION D'UN SUBSTRAT**
MITTEL ZUM FALSCHUNGSSICHEREN VON EINEM SUBSTRAT
MEANS FOR MAKING A SUBSTRATE SECURE

(30) Priorité: 03.05.2000 FR 0005650
(43) Date de publication de la demande: 29.01.2003
(73) Titulaire: Hologram Industries (S.A.), 77607 Marne-La-Vallée Cédex (FR)
(72) Inventeur: SOUPARIS, Hugues, F-94130 Nogent-sur-Marne (FR)
(74) Mandataire: Breese, Pierre
(86) Numéro de dépôt international: PCT/FR2001/001353
(87) Numéro de publication internationale: WO 2001/083237

(56) Documents cités:
- EP-A- 0 330 733
- GB-A- 2 258 426

## Description

La présente invention concerne un moyen pour la sécurisation d'un substrat, et en particulier un moyen de sécurisation de billets de banque ou de documents fiduciaires.

On connaît dans l'état de la technique des moyens de sécurisation formés par des bandes étroites présentant un aspect visuel aisément reconnaissable et vérifiable et limitant les risques de falsification.

A titre d'exemple, le brevet européen EP229645 décrit un procédé pour réaliser un papier de sécurité comprenant un élément de sécurité incorporé dans le papier sous forme d'un fil ou d'une bande. L'élément de sécurité est situé au moins localement dans des régions d'épaisseur plus faible du papier ou sur la surface du papier.

Une première couche de papier est formée sur une première partie humide d'une machine à papier, qui est détachée de la toile métallique au moyen d'une bande preneuse. Une seconde couche de papier est formée sur une seconde partie humide d'une machine à papier. L'une ou les deux couches de papier présentent au moins des régions locales d'épaisseur plus faible, représentant jusqu'à 30% de l'épaisseur totale des deux couches de papier.

Pour améliorer ce procédé de l'art antérieur, le brevet américain US4943093 propose la réalisation d'un papier de sécurité, et un dispositif de sécurité placé entre les deux surfaces du papier à titre de caractéristique de sécurité publique, comprenant un substrat souple ayant une couche de métal sur une face du substrat. Le dispositif de sécurité, qui présente une largeur inférieure à 5 mm, est disposé au moins partiellement entre les surfaces du papier. Un trajet métallique continu est présent sur un côté au moins du dispositif sur toute sa longueur. Le dispositif présente des parties démétalisées qui sont perméables à la lumière et qui sont comprises entre 10 et 50 % de la surface du dispositif. Les parties sans métal placées le long du dispositif forment un motif, un dessin ou des signes répétitifs.

Par ailleurs, le brevet européen EP 330 733 décrit un moyen de sécurisation d'un substrat conforme au préambule de la revendication 1.

Le but de l'invention est de renforcer encore la sécurité de telles solutions en proposant un moyen de sécurité facile à poser et difficile à contrefaire.

À cet effet, l'invention concerne un moyen de sécurisation d'un substrat selon la revendication 1.

Selon une variante, il comporte une couche additionnelle formée par un vernis estampé.

Avantageusement, les pigments optiquement actifs sont constitués par :
- des pigments thermosensibles
- des pigments luminescents
- des pigments triboluminescents
- des pigments iridescents
- des pigments photoluminescents excitables par un rayonnement ultraviolet.

Selon un mode de réalisation particulier, le moyen de sécurisation selon l'invention présente une alternance de pigments optiquement actifs de nature différentes.

De préférence, il est réalisé sous forme d'une bobine étroite.

La présente invention sera mieux comprise à la lecture de la description d'un exemple non limitatif de réalisation qui suit, se référant aux dessins annexés où :
- la figure 1 représente une vue en coupe d'un élément selon l'invention ;
- la figure 2 représente une vue d'une première variante de réalisation ;
- la figure 3 représente une vue d'une deuxième variante de réalisation.

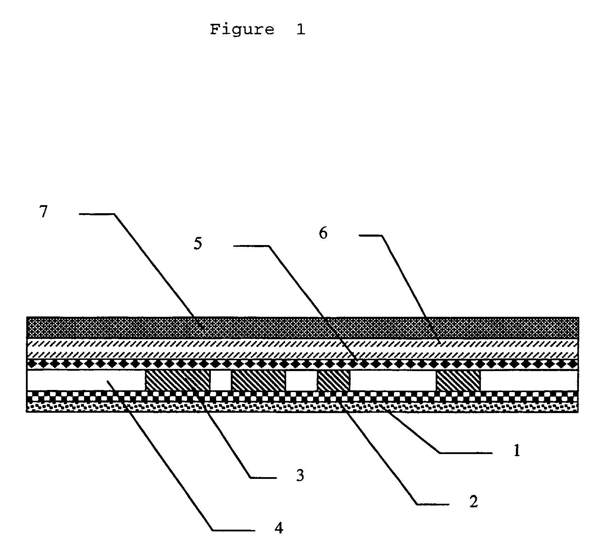

La figure 1 représente une vue en coupe d'un élément selon l'invention. L'élément de marquage est formé par une couche adhésive (1) inférieure pour le collage sur un substrat, par exemple une feuille de papier.

Cette couche est recouverte par une couche pigmentée (2) sur laquelle est déposée une alternance de zones métallisées (3) et de zones démétallisées (4).

Une couche optionnelle (5) formée par un vernis estampé constitue un hologramme transparent.

Elle est recouverte par une couche de détachement (6) et un film de polyester (7).

La couche pigmentée (2) comprend des pigments optiquement actifs produisant des effets faciles à constater visuellement, mais difficiles à reproduire, par exemple des pigments dont la couleur varie en fonction de la température, de l'éclairage incident, de l'orientation, de la gravité, sous l'effet d'un frottement, etc.

L'élément selon l'invention est fabriqué par impression sur la surface de préparation en polyester (7) d'une couche métallique, par exemple par dépôt sous vide, et par démétallisation partielle de la couche ainsi réalisée. Cette démétallisation peut être réalisée par un bain chimique. Sur la couche formée par l'alternance de zones métallisées et de zones démétallisées, on dépose ensuite la couche pigmentée réalisant des motifs reconnaissables. On termine la préparation par le dépôt d'une couche adhésive (1).

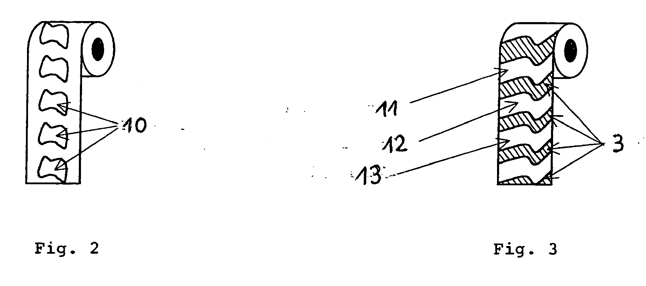

Les figures 2 et 3 représentent deux exemples de réalisation particuliers.

L'élément de sécurité est fourni sous la forme d'une bande étroite permettant la dépose d'une piste de marquage sur un substrat. Cette piste présente un aspect global métallisé, avec des fenêtres (10) démétallisées formant des motifs reconnaissables par leur aspect non brillant.

La piste peut aussi présenter une alternance de zones (11) comportant des pigments iridescents superposés aux zones métallisées, de zones (12) présentant des pigments thermosensibles et de zones (13) présentant des pigments excitables par un rayonnement ultraviolet.

La piste peut être apposée par un simple collage sur un substrat pour conférer à ce dernier un comportement optique particulier et facilement contrôlable.

Elle permet de simplifier la fabrication de substrats sécurisés contre les fraudes et falsifications, tout en assurant une grande difficulté de contrefaçon, en raison de la combinaison d'effets optiques difficilement analysables et encore plus difficilement reproductibles.

## Revendications

1. Moyen de sécurisation d'un substrat constitué par un signe optiquement vérifiable comprenant une couche métallique (3) partiellement démétalisée (4) en forme de graphisme de contrôle déposée sur une couche intercalaire (2) comprenant des pigments optiquement actifs, **caractérisé en ce qu'**il comprend une couche d'adhésif (1) recouverte par la couche intercalaire (2) et **en ce qu'**il est revêtu par un film de polyester (7) déposé sur une couche de détachement (6) recouvrant la couche métallique (3) partiellement démétalisée (4).

2. Moyen de sécurisation d'un substrat selon la revendication 1, **caractérisé en ce qu'**il comporte une couche additionnelle (5) formée par un vernis estampé, située entre la couche métallique (3) partiellement démétalisée (4) et la couche de détachement (6).

3. Moyen de sécurisation d'un substrat selon l'une quelconque des revendications 1 ou 2, **caractérisé en ce que** les pigments optiquement actifs sont des pigments thermosensibles (12).

4. Moyen de sécurisation d'un substrat selon l'une quelconque des revendications 1 ou 2, **caractérisé en ce que** les pigments optiquement actifs sont des pigments luminescents.

5. Moyen de sécurisation d'un substrat selon l'une quelconque des revendications 1 ou 2, **caractérisé en ce que** les pigments optiquement actifs sont des pigments triboluminescents.

6. Moyen de sécurisation d'un substrat selon l'une quelconque des revendications 1 ou 2, **caractérisé en ce que** les pigments optiquement actifs sont des pigments iridescents (11).

7. Moyen de sécurisation d'un substrat selon l'une quelconque des revendications 1 ou 2, **caractérisé en ce que** les pigments optiquement actifs sont des pigments (13) photoluminescents excitables par un rayonnement ultraviolet.

8. Moyen de sécurisation d'un substrat selon l'une quelconque des revendications précédentes, **caractérisé en ce qu'**il présente une alternance de pigments optiquement actifs de nature différentes.

9. Moyen de sécurisation d'un substrat selon l'une quelconque des revendications précédentes, **caractérisé en ce qu'**il est réalisé sous forme d'une bobine étroite.

## Claims

1. Means for protecting a substrate composed of an optically verifiable sign comprising a partially demetallized (4) metallic layer (3) in the form of a control graphic deposited on an intermediate layer (2) comprising optically active pigments, **characterized in that** it includes a layer of adhesive (1) covered by the intermediate layer (2) and **in that** it is coated with a polyester film (7) deposited on a peeling layer (6) covering the partially demetallized (4) metallic layer (3).

2. Means for protecting a substrate according to claim 1, **characterized in that** it includes an additional layer (5) formed by an embossed varnish, placed between the partially demetallized (4) metallic layer (3) and the peeling layer (6).

3. Means for protecting a substrate according to any one of claims 1 or 2, **characterized in that** the optically active pigments are thermally sensitive pigments (12).

4. Means for protecting a substrate according to any one of claims 1 or 2, **characterized in that** the optically active pigments are luminescent pigments.

5. Means for protecting a substrate according to any one of claims 1 or 2, **characterized in that** the optically active pigments are triboluminescent pigments.

6. Means for protecting a substrate according to any one of claims 1 or 2, **characterized in that** the optically active pigments are iridescent pigments (11).

7. Means for protecting a substrate according to any one of claims 1 or 2, **characterized in that** the optically active pigments are photoluminescent pigments (13) which can be excited by an ultraviolet radiation.

8. Means for protecting a substrate according to any one of the preceding claims, **characterized in that** it has alternating optically active pigments of various nature.

9. Means for protecting a substrate according to any one of the preceding claims, **characterized in that** it is made in the form of a narrow roll.

## Patentansprüche

1. Mittel für die Sicherung eines Substrats, das aus einem optisch verifizierbaren Zeichen besteht, eine Metallschicht (3) umfaßt, die teilweise entmetallisiert (4) ist und die Form einer Kontrollgrafik hat, die auf einer Zwischenschicht (2) abgelegt ist, das optisch aktive Pigmente umfaßt, **dadurch gekennzeichnet, daß** es eine Kleberschicht (1) umfaßt, die von der Zwischenschicht (2) überdeckt ist, und **dadurch**, daß es mit einer Polyesterfolie (7) verkleidet ist, die auf einer Löseschicht (6) abgelegt ist, die die teilweise entmetallisierte (4) Metallschicht (3) abdeckt.

2. Mittel für die Sicherung eines Substrats nach Anspruch 1, **dadurch gekennzeichnet, daß** es eine zusätzliche Schicht (5) umfaßt, die von einem geprägten Lack gebildet wird, die sich zwischen der teilweise entmetallisierten (4) und der Löseschicht (6) befindet.

3. Mittel für die Sicherung eines Substrats nach einem beliebigen der vorstehenden Ansprüche 1 oder 2, **dadurch gekennzeichnet, daß** die optisch aktiven Pigmente wärmeempfindliche Pigmente (12) sind.

4. Mittel für die Sicherung eines Substrats nach einem beliebigen der vorstehenden Ansprüche 1 oder 2, **dadurch gekennzeichnet, daß** die optisch aktiven Pigmente selbstleuchtende Pigmente sind.

5. Mittel für die Sicherung eines Substrats nach einem beliebigen der vorstehenden Ansprüche 1 oder 2, **dadurch gekennzeichnet, daß** die optisch aktiven Pigmente tribolumineszierende Pigmente sind.

6. Mittel für die Sicherung eines Substrats nach einem beliebigen der vorstehenden Ansprüche 1 oder 2, **dadurch gekennzeichnet, daß** die optisch aktiven Pigmente schillernde Pigmente (11) sind.

7. Mittel für die Sicherung eines Substrats nach einem beliebigen der vorstehenden Ansprüche 1 oder 2, **dadurch gekennzeichnet, daß** die optisch aktiven Pigmente photolumineszierende Pigmente (13) sind, die durch eine UV-Strahlung erregbar sind.

8. Mittel für die Sicherung eines Substrats nach einem beliebigen der vorstehenden Ansprüche, **dadurch gekennzeichnet, daß** es abwechselnde optisch aktive Pigmente verschiedener Arten aufweist.

9. Mittel für die Sicherung eines Substrats nach einem beliebigen der vorstehenden Ansprüche, **dadurch gekennzeichnet, daß** es in Form einer engen Spule ausgeführt ist.
